# EUROPEAN PATENT APPLICATION

(11) **EP 4 703 833 A1**
(43) Date of publication of application: **04.03.2026**
(21) Application number: 23935486.3
(22) Date of filing: 28.04.2023
(51) Int. Cl.: G05D 1/246, B25J 9/16

(54) **ROBOT TRAVEL CONTROL SYSTEM AND ROBOT CONTROL METHOD**

(71) Applicant: Bear Robotics Korea, Inc., Seoul 04779 (KR)
(72) Inventor: KIM, Suhyung, Seoul 06772 (KR)
(74) Representative: Murgitroyd & Company
(86) International application number: PCT/KR2023/005924
(87) International publication number: WO 2024/225512

(57) **Abstract**

Disclosed are a robot travel control system and robot control method. The robot travel control system according to the present disclosure comprises: a plurality of robots that travel in a predetermined space on a map; and a server that communicates with the plurality of robots and determines the level of congestion in a designated zone requiring traffic control in the predetermined space on the map. In addition, the server: registers at least one designated zone as a detour node on the basis of the determined level of congestion; detects a robot having the registered detour node in the movement path and entering within a certain range of the detour node; and generates and provides a detour path of the detected robot in consideration of the respective movement paths of the other robots present around the detour node. Accordingly, the occurrence of congestion areas can be minimized by identifying the level of congestion in a space in advance and providing detour paths so that the robots do not crowd a specific section. Consequently, it is possible for the robots to complete tasks without delay.

## Description

### TECHNICAL FIELD

The present disclosure relates to a robot driving control system and a robot control method, and more specifically, to a robot driving control system and a robot control method, which are implemented to enable a plurality of robots to prevent congestion by communicating with a server while traveling in a predetermined space.

### BACKGROUND

A robot refers to a machine capable of autonomous driving to independently handle a given task, and robots are used in various fields. Such a robot is equipped with a plurality of sensors for avoiding obstacles during driving, which enable the robot to autonomously navigate, while avoiding the obstacles.

When multiple robots are driving in a service-providing space, a congestion situation may occur, such as multiple robots crowding into one area. Therefore, it is important to minimize the congestion situation and ensure the robots travel by appropriately balancing their driving paths. However, determining the congestion level of every space where multiple robots may move is computationally burdensome and inefficient.

In this regard, Korean Registered Patent No. 10-1215395 (hereinafter, 'Prior Art 1') discloses a technology for avoiding deadlock or a collision between robots so that multiple robots may have the shortest movement time and distance. However, while Prior Art 1 is advantageous for setting an optimal path with a low computation volume, it has limitations in being used to resolve clustering of multiple robots.

Further, Korean Registered Patent No. 10-1620290 (hereinafter, 'Prior Art 2') discloses a technology for generating a path to avoid a collision between a plurality of moving robots. However, Prior Art 2 presents driving priorities and guidance to a new path to prevent the collision of relevant robots when a collision is predicted, and thus it is irrelevant to proactively minimizing congestion situations where a collision is not predicted.

Therefore, there is a need to seek a method for proactively balancing the paths of multiple robots to prevent them from crowding into a specific section, even if an actual collision does not occur among them.

### DISCLOSURE

### TECHNICAL PROBLEM

Accordingly, an embodiment of the present disclosure provides a robot driving control system and a robot control method, which may provide balancing to minimize the occurrence of congested areas.

Further, an embodiment of the present disclosure provides a robot driving control system and a robot control method, which may proactively determine the congestion level of robots around a zone like an intersection on a map, and regenerate a path to prevent robots from crowding into a specific section.

Further, an embodiment of the present disclosure provides a robot driving control system and a robot control method, which when generating a detour path to prevent robots from crowding into a specific section, ensure that the generated detour path does not overlap with the driving paths of other currently moving robots.

### TECHNICAL SOLUTION

In a robot driving control system and a robot control method according to an embodiment of the present disclosure, a server communicates with a plurality of robots, determines a congestion level around an intersection or a narrow path on a map, and then controls a moving robot to detour and pre-emptively avoid a congested zone.

The detour path for replacement is generated by assigning a bias in consideration of the driving paths of other moving robots to ensure that the paths do not overlap.

Further, the occurrence of congestion may be balanced efficiently beforehand by determining a congestion level only around an area requiring traffic control (a designated zone) (e.g., an intersection, a passage, a narrow path, and so on), rather than congestion degrees for all robots across an entire map.

Specifically, a robot driving control system according to the present disclosure includes a plurality of robots driving in a predetermined space on a map, and a server communicating with the plurality of robots and determining a congestion level of a designated zone requiring traffic control in the predetermined space on the map. Further, the server registers at least one designated zone as a detour node based on a determined congestion level, detects a robot that includes the registered detour node in a driving path thereof and enters within a predetermined range of the detour node, and generates a detour path for the detected robot by considering respective driving paths of other robots existing around the detour node.

According to an embodiment, the server may determine a congestion level of each designated zone by considering driving directions of other robots existing around the designated zone.

According to an embodiment, the server determines whether to register a detour node based on whether the determined congestion level exceeds a predetermined reference, registers a detour node corresponding to a designated zone having a congestion level exceeding the predetermined reference in a list, and deletes a detour node corresponding to a designated zone having a congestion level decreased to satisfy the predetermined reference from the list.

According to an embodiment, the server determines congestion levels of designated zones across the entire map at specific time intervals and updates the list based on the determination, and the specific time interval is variable based on characteristics of the map and a total number of robots operating in the predetermined space.

According to an embodiment, the server may generate the detour path for the detected robot by counting biases on a link of the detour node, considering the respective driving paths of the other robots.

According to an embodiment, when the driving direction of another robot approaches the detour node, the server may assign an additional bias to a link of the driving path of the other robot to avoid the link, and when the driving direction of the other robot leaves the detour node, the server may assign the same bias as other links to the link of the driving path of the other robot to select the link for the detour path.

According to an embodiment, the server may generate the detour path not to overlap with paths of moving robots by assigning a bias to each designated zone towards which the robots moving in the predetermined space are heading, considering a current position and destination of the detected robot.

According to an embodiment, when the detected robot receives the detour path from the server after entering within the predetermined range, the robot may transmit information about a driving path changed according to the received detour path to the server and perform driving according to the changed driving path.

According to an embodiment, when the generated detour path is the same as an existing driving path or when a current driving path of the detected robot is a one-way path, the server may transmit a stop command to the detected robot to allow the robot to start driving after a congestion situation of a forward detour node is resolved.

Further, a robot control method including a plurality of robots driving in a predetermined space on a map and a server communicating with the plurality of robots according to an embodiment of the present disclosure may include determining a congestion level of a designated zone requiring traffic control in the predetermined space on the map, registering at least one designated zone as a detour node based on a determined congestion level, detecting a robot that includes the registered detour node in a driving path thereof and enters within a predetermined range of the detour node, and generating a detour path for the detected robot by considering respective driving paths of other robots existing around the detour node.

### ADVANTAGEOUS EFFECTS

In the robot driving control system and the robot control method according to an embodiment of the present disclosure, even when actual congestion or collision has not yet occurred, the congestion level of a space is proactively determined and a detour path is provided to prevent robots from crowding into a specific section, thereby minimizing the occurrence of a congested area. Consequently, robots may complete tasks (e.g., delivery, picking, and so on) without a time delay.

Further, in the robot driving control system and the robot control method according to an embodiment of the present disclosure, when a path detouring around a congested area is generated, path overlap is prevented by considering the driving directions and driving paths of other robots. This not only prevents robots from crowding into a specific section but also ensures they move in an overall balanced manner.

Further, in the robot driving control system and the robot control method according to an embodiment of the present disclosure, in an exceptional circumstance such as when a robot is currently driving in a one-way direction or when a detour path is identical to an existing driving path, a flexible operation is possible by allowing the robot to wait for a specific time and then resume driving once the congestion situation is resolved.

### BRIEF DESCRIPTION OF THE DRAWINGS

FIG. 1 is an exemplary block diagram illustrating a robot driving control system related to the present disclosure.
FIG. 2 is a diagram illustrating the congestion levels of designated zones and registration of detour nodes in relation to the present disclosure.
FIG. 3 is a block diagram illustrating the detailed configurations of a robot and a server communicating with the robot in relation to the present disclosure.
FIG. 4 is a representative flowchart illustrating a robot control method related to the present disclosure.
FIG. 5 is a diagram illustrating determination of the congestion level of a designated zone by considering the moving paths of other robots in relation to the present disclosure.
FIG. 6 is a diagram illustrating determination of a detour path by considering the respective driving directions of all moving robots in relation to the present disclosure.
FIG. 7 is a diagram illustrating an operation when a detour path and an existing driving path are the same in relation to the present disclosure.
FIG. 8 is a detailed flowchart illustrating a method for providing a detour path for congestion avoidance in relation to the present disclosure.

### DETAILED DESCRIPTION

Embodiments disclosed herein will be described in detail with reference to the attached drawings. Through the drawings, like reference numerals denote the same or similar components and a redundant description of the components will be avoided. The suffixes "module" and "unit" used for components in the following description are given or used interchangeably only for the convenience of description, and do not have distinct meanings or roles in themselves. In addition, when describing the embodiments disclosed herein, a detailed description of a related known technology will be omitted lest it should obscure the subject matter of the embodiments. In addition, the attached drawings are only intended to facilitate easy understanding of the embodiments disclosed herein, and do not limit the technical ideas disclosed in the specification, which should be understood to include all modifications, equivalents, or substitutes included in the scope of the present disclosure.

Terms including ordinal numbers such as first, second, and so on may be used to describe various components. However, the components are not limited by the terms. The above terms are used only for the purpose of distinguishing one component from another.

When it is said that a component is "coupled" or "connected" to another component, the components should be understood as directly connected or connected with a third component in between. On the other hand, when it is said that a component is "directly coupled" or "directly connected" to another component, it should be understood that there are no other components in between.

A singular expression includes plural referents unless the context clearly indicates otherwise.

In this application, the term "comprise" or "have(has)" is intended to specify the presence of a feature, number, step, operation, component, part, or combination thereof described in the specification, not excluding the possibility of the presence or addition of one or more other features, numbers, steps, operations, components, parts, or combinations thereof.

A "robot" disclosed in the present disclosure refers to a machine capable of performing a predetermined task or mission while driving autonomously. In the present disclosure, the robot may be used to mean a plurality of robots that drive in a predetermined space and are capable of performing their predetermined tasks or missions, such as a plurality of logistics robots, delivery robots, or other mobile robots. In this case, while the robots perform their respective tasks or missions, they may converge on an area such as an intersection or a collision may be expected, depending on their driving paths or driving directions.

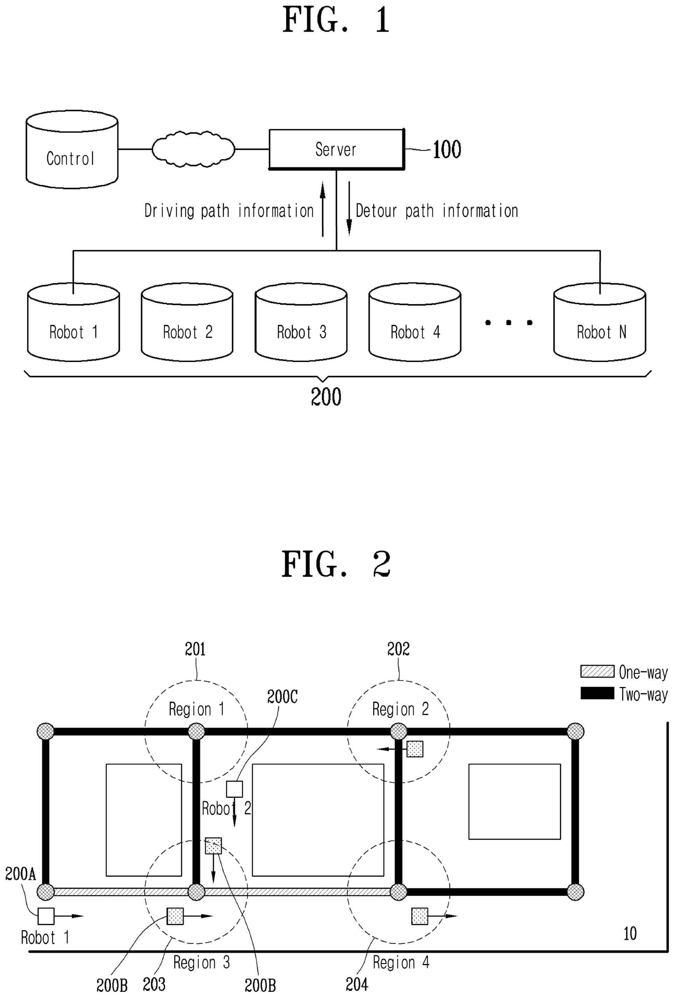

FIG. 1 is an exemplary block diagram illustrating a robot driving control system related to the present disclosure.

Referring to FIG. 1, the robot driving control system includes robots 200 and a server 100 communicating with the robots. The server 100 may receive status information from the robots 200 and transmit a control command to each robot 200 based on the received status information.

The robots 200 are a plurality of robots that drive in a predetermined space on a map, which may include, for example, robot 1, robot 2, ... robot N.

The map is, for example, a map of a driving area, and may include, for example, a navigation map, a simultaneous localization and mapping (SLAM) map, a learning map, a topological map, a grid map based on cell data, an obstacle recognition map, and so on. In the present disclosure, the description is based on the premise that the robots 200 drive in a predetermined space on a topological map used for global positioning, which should not be construed as limiting.

The server 100 may communicate with the robots 200 through wired or wireless communication. For example, the robots 200 may communicate with the server 100 using wireless communication schemes such as wireless LAN (WLAN), wireless-fidelity (Wi-Fi), Wi-Fi Direct, digital living network alliance (DLNA), wireless broadband (WiBro), world interoperability for microwave access (WiMAX), high speed downlink packet access (HSDPA), high speed uplink packet access (HSUPA), long term evolution (LTE), long term evolution-advanced (LTE-A), and so on.

As illustrated in FIG. 1, the server 100 may communicate with another control server to receive a task or mission for each robot 200 and allocate it to the robot 200.

The server 100 may recognize a space where the robots drive on the map, for example, a topological map by dividing it into a plurality of zones. Specifically, the server 100 may recognize a designated zone requiring traffic control among the plurality of zones.

The designated zone includes a section where (internal) congestion occurs, such as an intersection, a one-way driving path, and other narrow passages (e.g., a narrow section where only one robot may pass at a time), and refers to an area or region that requires control of the server 100.

According to embodiments, the server 100 is implemented to determine the congestion level of the robot 200 around an intersection on the (topology) map, and then generate and provide a detour path to prevent congestion in advance by considering the moving paths of robots in the congested designated zone.

The server 100 may determine the congestion level of the designated zone at specific time intervals, considering the number of currently operating robots 200 in a space on the map and the characteristics of the map. For example, when about 30 robots are operating in the space on the map, the congestion levels of designated zones on the entire map may be performed at intervals of approximately 8 seconds.

When determining the congestion level of a designated zone, the server 100 considers not only the number of robots in the designated zone but also the moving paths of the robots to determine the congestion level.

For example, when multiple robots are moving in a specific designated zone but are heading in different directions without overlap between their moving paths, this is not determined to be a congestion situation. Further, for example, when two robots are moving in a specific designated zone and approaching each other in opposite directions, it is determined to be a congestion situation.

To this end, the server 100 receives position information and driving path information from the robots 200, especially from robots around the designated zone, and use the received position information and driving path information to determine the congestion level of the designated zone.

When the congestion level of the designated zone exceeds a predetermined reference, the server 100 determines that the congestion level is high and registers it as a detour node. When the congestion level of the designated zone is within the predetermined reference, the server 100 determines that the congestion level is low (or normal) and passes over the designated zone. That is, the server 100 only registers a zone with a high congestion level among the designated zones on the map as a detour node.

Registering a designated zone as a detour node means that the designated zone is set as a section that the server 100 controls and manages so that a moving robot detours around that zone. Information (e.g., position coordinates, a flag indicating registration, and so on) about the registered detour node may be stored in the memory of the server 100 or a storage linked to the server 100.

Since the server 100 repeatedly determines the congestion level of a designated zone at specific time intervals, a designated zone registered as a detour node may also be deregistered when congestion is resolved, and a new designated zone may be registered as a detour node.

When the detour node registration is complete, the server 100 searches for and detects a robot that has the registered detour node in a moving path thereof and enters within a predetermined range of the detour node. The predetermined range refers to a surrounding area including the detour node.

According to an embodiment, when a robot is sufficiently expected to enter within the predetermined range within a specific time (e.g., within 1 to 2 seconds) even before it enters within the predetermined range, the server 100 may detect the robot.

The robot detected by the server 100 becomes a target robot for a detour path. That is, the detected robot does not follow its existing driving path but is controlled to drive along the detour path generated by the server 100.

The server 100 generates the detour path for the detected robot by considering the respective moving paths of other robots existing around the detour node.

For example, the server 100 assigns a bias to a link corresponding to each of the moving paths of the other robots and selects a link for the detour path, so that the detour path for the detected robot does not overlap with the respective moving paths of the other robots. Consequently, the detour path will be generated to bypass the links to which biases have been assigned.

In addition, at the time of generating the detour path, the server 100 generates the detour path for the detected robot so that it does not overlap with the driving paths of all robots moving in the space on the map.

To this end, the server 100 receives position information and driving path information of the robots, and based on the received information, identifies a designated zone (hereinafter, 'forward node') located in front of the driving direction of each robot, and assigns a bias to it. Accordingly, the detour path for the detected robot will be generated as a route that minimizes biases, that is, a route that passes through the fewest forward nodes.

Once the detour path for the detected robot is generated in this manner, the server 100 transmits corresponding detour path information to the detected robot, and the detected robot drives along the detour path instead of the existing driving path.

In an exceptional situation such as when the detour path is the same as the existing travel path, or when the detected robot is close to a destination, or when the detour path is much longer than the existing travel path, the server 100 may transmit a stop command to the detected robot until the congestion situation is resolved, and subsequently control and manage the robot to initiate driving when the congestion situation is resolved.

In this way, according to the robot driving control system of the present disclosure, even when actual congestion or collision has not yet occurred, the congestion level of a space is proactively determined and a detour path is provided to prevent robots from crowding into a specific section, thereby minimizing the occurrence of a congested area. Consequently, the robots may complete tasks (e.g., delivery, picking, and so on) without a time delay.

FIG. 2 is a diagram illustrating the congestion levels of designated zones and registration of detour nodes in relation to the present disclosure.

FIG. 2 illustrates a portion of a topology map 10 on which a space includes one-way driving paths and two-way driving paths. A surrounding area around each intersection on the map 10 is set as a designated zone. In FIG. 2, designated zones 201, 202, 203, and 204 are named region 1, region 2, region 3, and region 4, respectively, for convenience of description.

The server 100 (in FIG. 1) determines the congestion level of each of the designated zones 201, 202, 203, and 204, considering the driving directions of other robots existing around the designated zone. When the congestion level is equal to or greater than a predetermined reference, the server 100 registers the corresponding area as a detour node.

Specifically, the server 100 determines whether to register a detour node based on whether the determined congestion level exceeds the predetermined reference.

The predetermined reference means a reference for determining a designated zone as not congested. For example, when the driving directions are the same, and thus there is no risk of a collision, or when the driving paths do not overlap, or when the driving directions are different but the path is a two-way path, the designated zone may be determined to be within the predetermined reference.

Therefore, a case in which the congestion level exceeds the predetermined reference means that the designated zone is determined to be congested. For example, when the driving paths of robots overlap, or when the path is a one-way path but the robots are driving towards each other, it is considered that the congestion level exceeds the predetermined reference and the designated zone is determined to be congested.

In FIG. 2, as a result of determining the congestion levels of the designated zones 201, 202, 203, and 204, region 3 is determined to be congested because two robots 200B whose driving paths overlap are passing through a one-way path. That is, the server 100 (in FIG. 1) determines region 3 to have a congestion level equal to or greater than the predetermined reference and registers region 3 as a detour node.

Region 1, region 2, and region 4 are determined not to be congested and are passed over without being registered as detour nodes. Once the detour node registration for the entire map is complete, the server 100 only needs to search for robots (e.g., robot 1 and robot 2) currently moving towards region 3 and provide a detour path to them.

For example, since region 3 is registered as a detour node in FIG. 2, the server 100 detects robots (e.g., robot 1, robot 2) moving toward region 3, and provides a detour path to a robot within a predetermined range among them, so that the robot does not pass through or bypasses the corresponding region (i.e., region 3).

Since robot 2 is traveling on a two-way path, it may bypass region 3. Therefore, the server 100 may transmit a command to robot 2 to bypass region 3, and robot 2 may bypass region 3 by passing through region 1 according to the detour path based on the command.

However, robot 1 200A is traveling on a one-way path and thus should pass through region 3. That is, even if a detour path is generated, robot 1 200A inevitably has to pass through region 3. Accordingly, the server 100 transmits a stop command to robot 1 200A to wait for a predetermined time, and then, once the congestion situation in region 3 is resolved, it transmits a drive command to robot 1 200A.

Since the congestion level determination for the designated zones 201, 202, 203, and 204 is repeatedly performed at specific time intervals (e.g., 8 to 10 seconds), the server 100 may determine whether the congestion situation for region 3 has been resolved after the specific time interval. Alternatively, since the server 100 or robot 1 200A may search for robots around the detour node at intervals shorter than the specific time intervals, when at least one of the robots 200B in region 3 has moved and the congestion situation has been resolved, this may be recognized. That is, robot 1 200A may briefly wait at its current position and then resume driving after at least one of the robots 200B in region 3 has moved out of region 3 (after the congestion situation is resolved).

Although not shown in FIG. 2, when the driving path of a single robot includes a plurality of detour nodes, a detour path may be generated with respect to a detour node closest to the current position.

As described above, as the robot driving control system according to an embodiment of the present disclosure generates a detour path that bypasses a congested area by considering the driving directions and paths of other robots, such that the paths do not overlap. This ensures that robots not only do not crowd into a specific section but also move in a balanced manner as a whole.

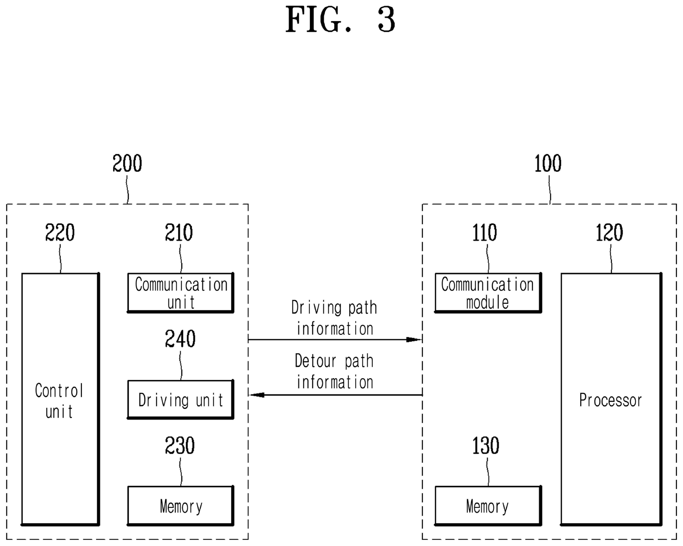

FIG. 3 is a block diagram illustrating the detailed configurations of a robot and a server that communicates with the robot in relation to the present disclosure.

Referring to FIG. 3, the robot 200 may communicate with the server 100 and include a communication unit 210, a controller 220, a memory 230, and a driving unit 240. The components illustrated in FIG. 2 are not essential for implementing the robot, and the robot 200 disclosed herein may include more or fewer components than those enumerated above. Additionally, the server 100 may communicate with multiple robots and include a communication module 110, a processor 120, and a memory 130.

The communication unit 210 of the robot 200 may include one or more modules that enable wireless communication with the server 100 and one or more modules for connecting the robot 200 to a network.

The communication unit 210 of the robot 200 may perform communication with an artificial intelligence server, using wireless Internet communication technologies such as wireless LAN (WLAN), wireless-fidelity (Wi-Fi), Wi-Fi Direct, digital living network alliance (DLNA), wireless broadband (WiBro), world interoperability for microwave access (WiMAX), high speed downlink packet access (HSDPA), high speed uplink packet access (HSUPA), long term evolution (LTE), and long term evolution-advanced (LTE-A). In addition, the communication unit 110 may communicate with the server 100 using short-range communication technologies such as Bluetooth^{™}, radio frequency identification (RFID), infrared data association (IrDA), ultra wideband (UWB), ZigBee, and near field communication (NFC).

The robot 200 may transmit its position information and driving path information to the communication module 110 of the server 100 through the communication unit 210. For example, the robot 200 may transmit coordinate values corresponding to its current position to the communication module 110 of the server 100 through the communication unit 210, and when the driving path includes a detour node, it may transmit its driving path information to the server 100.

The robot 200 may receive detour path information related to a detour node from the communication module 110 of the server 100 through the communication unit 210. For example, the robot 200 may receive the detour path which has been generated by assigning a bias to it so that the detour path does not overlap with other nearby robots, through the communication unit 210. Alternatively, for example, when the robot 200 is not capable of detouring from its current location, it may receive a driving wait/stop command through the communication unit 210 until the congestion situation is resolved.

The controller 220 of the robot 200 typically provides overall control to the operation of the robot 200. The controller 220 may process signals, data, information, and so on input or output through the components described above, execute application programs stored in the memory 230, or control the driving unit 240 to process an assigned task or provide a service.

Further, although not shown, the controller 220 of the robot 200 may include a learning processor (not shown) to perform an operation related to the artificial intelligence technology of the robot. The learning processor may train one or more models configured as an artificial neural network using training data, and for this purpose, may be configured to receive, classify, store, and output information to be used for data mining, data analysis, intelligent decision-making, and machine learning algorithms and techniques. In addition, the learning processor may include one or more memory units configured to store information received, detected, sensed, generated, or predefined by the robot or otherwise output through the robot, or data received, detected, sensed, generated, predefined, or output by other components, devices, and terminals. The learning processor may be integrated into the robot or may include a memory. In an embodiment, the learning processor may be implemented through the memory 230. However, the present disclosure is not limited to this, and the learning processor may be implemented in an external memory related to the robot 200 or through the memory 130 of the server 100 capable of communication with the robot 200. In another embodiment, the learning processor may be implemented through a memory maintained in a cloud computing environment or other remote memory accessible by the robot through a communication scheme such as a network.

The memory 230 of the robot 200 stores data supporting the various functions of the robot 200. The memory 230 may store multiple application programs or applications running on the robot 200, as well as data and instructions for the operation of the robot 200. Also, the memory 230 may store map data for a space in which the robot 100 drives to perform a task or mission. Further, the memory 230 may store the task assigned to the robot and driving path information for performing the assigned task.

The memory 230 may include at least one type of storage medium of, for example, a hard disk type, a solid state disk (SSD) type, a silicon disk drive (SDD) type, a multimedia card micro type, a card type memory (e.g., SD or XD memory), random access memory (RAM), static random access memory (SRAM), read-only memory (ROM), electrically erasable programmable read-only memory (EEPROM), programmable read-only memory (PROM), magnetic memory, magnetic disk, or optical disk.

The driving unit 240 of the robot 200 performs driving such as movement and rotation of a robot body. To this end, the driving unit 240 may include a plurality of driving wheels, a driving motor, and a plurality of casters. The driving unit 240 performs driving according to a control command received by the controller 220 of the robot 200, rotates to pick up logistics, and/or drives by bypassing a specific designated zone according to a detour path received from the server 100.

Although not shown, the robot 200 may be provided with various sensors for avoiding obstacles while driving in a predetermined space, such as a camera, an IR sensor, a LiDAR, a radar, a proximity sensor, and a UWB sensor. Further, the robot 200 may include a power supply for receiving external or internal power and supplying the power to each component included in the robot 200 under the control of the controller 220. This power supply may include a battery, and the battery may be implemented in a built-in or replaceable form.

At least some of the above components may operate in cooperation with each other to implement an operation, control, or control method of the robot according to various embodiments described below. Further, the operation, control, or control method may be implemented in the robot by executing at least one application program stored in the memory 230. Additionally, various embodiments disclosed below may be implemented in a recordable medium readable by a computer or a similar device using, for example, software, hardware, or a combination thereof.

The server 100 may be configured to include the communication module 110 for communicating with a plurality of robots, respectively, as illustrated in FIG. 1, the processor 120, and the memory 130.

The communication module 110 of the server 100 receives position information (e.g., coordinate values corresponding to current positions) from the plurality of communicating robots, respectively. For example, the communication module 110 may receive position information from robots located in a congested designated zone, that is, around a detour node, and receive position information of a robot detected to be entering an area around the detour node and provide it to the processor 120.

The communication module 110 of the server 100 generates a detour path for the detected robot and transmits the generated detour path to the detected robot, or transmits a waiting command to the detected robot until the congestion situation is resolved.

The processor 120 of the server 100 determines the respective congestion levels of all designated zones requiring traffic control on a map. To determine the congestion level of a designated zone, it is determined whether the degree of congestion in the designated zone is within or exceeds a predetermined level. For example, when the congestion level of the designated zone is within a predetermined reference, the processor 120 passes over the designated zone, considering that the designated zone is not congested, and when the congestion level of the designated zone exceeds the predetermined reference, the processor 120 determines the designated zone to be congested and registers it as a detour node so that other robots may detour.

The registration of detour nodes is performed for all designated zones across the map. That is, the processor 120 performs the detour node registration process by registering congested designated zones as detour nodes among all designated zones on the map, and passing over non-congested designated zones.

In the detour node registration process, the server 100 determines the congestion levels of all designated zones across the map at specific time intervals, taking into account the number of surrounding robots and the driving paths of those robots. Only designated zones determined to be congested are registered as detour nodes, and when a robot attempts to pass a registered detour node, the server 100 controls and manages it to drive by avoiding the detour node.

Once the detour node registration is complete, the processor 120 includes the detour nodes in paths and detects a robot approaching a detour node. The detected robot becomes a target robot for a detour path. To this end, the processor 120 receives current position information and driving path information from each robot through the communication module 110, and based on the received information, detects robots approaching the detour nodes.

To generate a detour path for the detected robot, the processor 120 assigns biases to the driving paths of robots around that detour node, and also assigns a bias to a forward designated zone in the driving direction of every robot moving on the map at that time, thereby generating a detour path that does not overlap with the paths of the moving robots.

When the processor 120 determines that the detected robot may not pass through the detour path or that the detour path is identical to an existing driving path, it transmits a command for the detected robot to wait/stop until the congestion situation in the corresponding detour node is resolved. Thereafter, when the congestion situation has been resolved, a driving start command is transmitted to the detected robot by the processor 120.

The memory 130 of the server 100 stores map data of a space where robots 200 drive. Also, the memory 130 stores registration information of detour nodes corresponding to congested designated zones. Further, the memory 130 may additionally store identification information, position information, and driving path information of robots attempting to enter a congested designated zone, and store the detour paths generated for these robots together.

According to an embodiment, the processor 120 determines the congestion levels of all designated zones on the map at specific time intervals and updates a list of registered detour nodes based on the determination. The specific time interval may vary based on the characteristics of the map and the total number of robots in operation.

For example, when the total number of operating robots is high, indicating an increased possibility of congestion, the interval for congestion determination may be changed to be shorter than before. Also, for example, when the map characteristics include short distances or consecutive sections between designated zones (e.g., intersection sections), the interval for congestion determination may be changed to be shorter. On the contrary, for example, when the number of operating robots decreases, indicating a reduced possibility of congestion, the interval for congestion determination may be changed to be longer than before.

The processor 120 may count the biases of links of the detour node by considering the respective driving paths of other robots existing around the detour node, and generate a detour path for the detected robot based on the count.

Specifically, when the driving direction of another robot approaches the detour node, the processor 120 assigns an additional bias to the link of the moving path of the other robot, to avoid the link. Further, when the driving direction of the other robot is away from the detour node, the processor 120 selects a link for the detour path by assigning the same bias to the link of the moving path of the other robot as other links. That is, the link for the detour path is selected from those that are either unbiased or assigned at least the same bias. Connecting selected links starting from the current position of the detected robot forms the detour path.

The processor 120 may generate a detour path that does not overlap with the paths of robots moving in the space on the map by assigning a bias to each designated zone that the moving robots are heading towards in consideration of the current position and destination of the detected robot.

Once the detour path is generated in this way, the processor 120 transmits detour path information to the detected robot through the communication module 110. Then, the detected robot transmits information about a modified driving path according to the received detour path to the server, and performs driving according to the modified driving path.

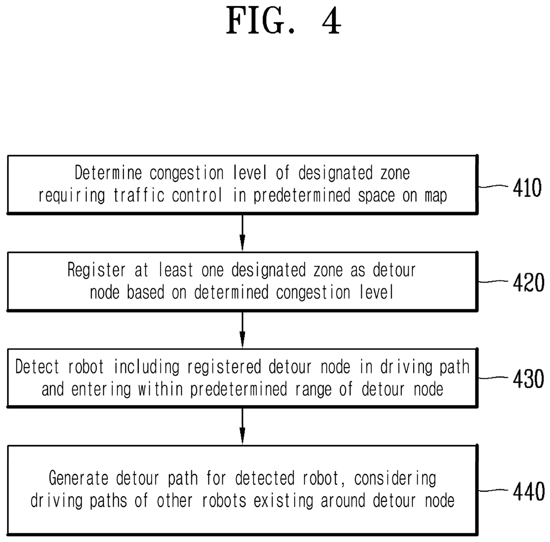

FIG. 4 is a representative flowchart illustrating a robot control method related to the present disclosure. Each step in FIG. 4 is performed by the server 100 communicating with a plurality of robots, or by the processor 120 of the server, unless otherwise stated.

Referring to FIG. 4, the server 100 (in FIG. 3), which communicates with a plurality of robots driving in a predetermined space on a map, determines the congestion level of a designated zone requiring traffic control in the predetermined space on the map (410). The designated zone refers to an area/region that may cause congestion on the map, including a node such as an intersection, a narrow path, a one-way path, or a passage.

According to an embodiment, the congestion level of the designated zone is determined by considering not only the number of surrounding robots but also by identifying the driving paths (or driving directions) of the robots.

Further, according to an embodiment, the server 100 determines the congestion levels of all designated zones included in the map and repeats the congestion determination at specific time intervals. For example, when approximately 40 robots are operating, the server 100 may determine the congestion level of a designated zone at intervals of 8 seconds.

When the congested level of a designated zone is within a predetermined reference, the server 100 determines that the designated zone is not congested and passes over that designated zone.

On the contrary, when the congested level exceeds the predetermined reference, for example, when the driving paths of surrounding robots overlap or the robots are on a one-way path with different driving directions, the server 100 determines that the designated zone is congested (in a congestion situation).

According to an embodiment, the congestion level of the designated zone is determined by considering the number of surrounding robots and the driving paths (driving directions) of the robots. For example, as the number of robots surrounding the designated zone increases, congestion increases, when a path on the map is one-way rather than two-way, congestion increases, and when the driving paths of robots overlap, congestion occurs.

Once the congestion levels of all designated zones have been identified by the server 100 in this way, only a congested designated zone is rebalanced thereafter.

To this end, the server 100 registers at least one designated zone as a detour node based on the determined congestion levels (420). As described above, a designated zone with a congested level exceeding the predetermined reference is registered as a detour node, and other robots may be controlled to avoid passing through this node, detour around it, or wait.

When there are a plurality of congested designated zones, a plurality of detour nodes are registered and managed in a list. A detour node included in the list is maintained when a corresponding congestion situation persists, and is deleted when the congestion situation is resolved. Further, when a new congested designated zone occurs, a new detour node is registered in the list. Since the congestion determination is repeated at specific time intervals, (the detour nodes in) the list is updated based on the result of new congestion determination. As such, detour nodes are continuously deleted/registered, thereby preventing the cumulative increase of computational complexity related to detour path generation described later.

Once the registration of all detour nodes is complete, the server 100 detects a robot having a driving path including a registered detour node and entering within a predetermined range of the detour node (430). It is assumed that the driving speeds of all robots heading to the detour node are the same.

Herein, a plurality of robots may be detected. For example, robot 1 and robot 2 heading towards region 3 may be detected simultaneously as described with reference to FIG. 2. Further, one robot may be detected a plurality of times as a robot heading towards a plurality of different detour nodes. In this case, a detour path will be generated as described below, with respect to a detour node closest to the current position of the detected robot.

Subsequently, the server 100 generates the detour path for the detected robot by considering the respective driving paths of other robots present around the detour node (440). A bias is assigned to a link corresponding to each of the driving paths of the other robots, so that the detected robot detours the link. However, when the link is a two-way link, it is counted with the same bias as other links.

The detour path should extend not only around the detour node but also to a final destination of the detected robot, and it is preferable that the path is selected so that it does not overlap with the driving paths of other robots moving on the map at that time.

To this end, in an embodiment, when generating the detour path, the server 100 may also assign a bias to a designated zone node ahead in the driving direction of every robot moving on the map at that time, thereby generating the detour path. This ensures that the detour path is generated in a balanced manner relative to the paths of other robots already moving.

As described above, according to embodiments of the present disclosure, even if actual congestion or collision does not occur, the congestion level of a space is determined in advance, and a detour path is provided to prevent robots from crowding into a specific section, thereby minimizing the occurrence of congested areas. Consequently, robots may complete their tasks (e.g., delivery, picking, and so on) without a time delay. Further, a path that bypasses a congested area is generated by considering the driving directions and paths of other robots, so that the paths do not overlap. Accordingly, robots not only avoid crowding into a specific section but also move in an overall balanced manner.

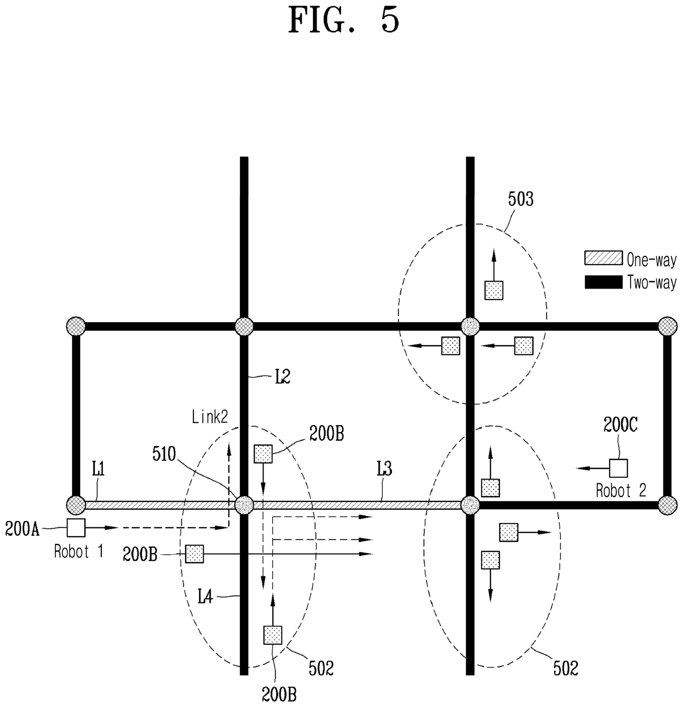

FIG. 5 is a diagram illustrating determination of the congestion level of a designated zone by considering the driving paths of other robots in relation to the present disclosure.

With reference to FIG. 5, an embodiment related to the process 410 of determining a congestion level in FIG. 4 will be described below in detail.

FIG. 5 illustrates a portion of a topology map, which includes both one-way and two-way driving paths. Designated zones are set around intersections on the map. When determining the congestion level of a designated zone, the determination is made by considering the driving directions of surrounding moving robots, not just the number of robots clustered nearby.

In FIG. 5, designated zone 1 501, designated zone 2 502, and designated zone 3 503 all have the same number of robots clustered around the intersection, namely three, but the driving directions of the robots are different.

Specifically, in the case of designated zone 1 501, the surrounding robots 200B pass the intersection and proceed to link L3 or link L4. Since links L3 and L4 are one-way driving paths and their paths overlap, the server 100 (in FIG. 1) determines that the congestion level of this designated zone is high (exceeds a predetermined level).

On the other hand, in the case of designated zone 2 502 and designated zone 3 503, the paths after passing the intersections do not overlap, and are two-way driving paths. Therefore, even though three robots are moving, the server 100 determines that the congestion levels of these designated zones 502 and 503 are not high (i.e., are within the predetermined level).

Accordingly, the server 100 may determine that the congestion level is highest when a robot attempts to approach designated zone 1 501, and determine that the congestion level is lowest when a robot is moving away from designated zone 1 501.

The server 100 registers the highly congested designated zone 1 501 as a detour node, and passes over the less congested designated zone 2 and designated zone 3 502 and 503.

Once the detour node registration is complete, the server 100 detects a robot among those moving on the map, which is entering within a predetermined range of designated zone 1 501. Robot 1 200A corresponds to this robot in FIG. 5. However, since robot 1 200A is currently on a one-way driving path and should pass through designated zone 1 501, a path should be regenerated to prevent path overlap by considering the driving paths of the other surrounding robots 200B.

To this end, the server 100 generates a detour path for robot 1 200A by counting the biases of links, considering the respective driving paths of the other robots 200B within designated zone 1 501.

Specifically, when the driving direction of another robot is approaching the detour node, the server 100 assigns an additional bias to the link of its driving path to make it avoided. Also, when the driving direction of the other robot is moving away from the detour node, the server 100 selects a link for the detour path by assigning the same bias as other links to the link of the driving path of the other robot.

In FIG. 5, when robot 1 100A checks the driving paths of the other robots 200B within designated zone 1 501 to bypass designated zone 1 501, two of the other robots 200B pass the intersection 510 and move to the right-direction link L3, and the other one passes the intersection 510 and moves to the downward link L4. In this case, the server 100 selects a path by assigning additional biases to links L3 and L4. Therefore, a path will be generated for robot 1 100A to pass the intersection 510 and head towards link L2.

As an illustrative comparison regarding link selection, in the case of robot 2 200C in FIG. 5, when passing the intersection of designated zone 2 502, three links are all two-way driving paths and the rest is a one-way driving path. Thus, it may be said that only the one-way driving path is assigned an additional bias, and the other three links are assigned the same bias.

The other robots 200B existing within the predetermined range of designated zone 1 501 are searched at shorter intervals (e.g., 500msec) than specific intervals at which the server 100 determines the congestion level. Therefore, even while designated zone 1 501 maintains its detour node registration status, robot 1 200A may recognize the resolution of the congestion situation due to the movement of the other robots 200B.

As such, a substantial congestion level is determined by considering the driving paths of robots not merely by the number of clustered robots in the present disclosure. Further, an optimal link for a detour path may be selected by assigning a weight or bias to the detour path of a robot approaching a congested area, considering the driving paths of other robots and the characteristics of the paths (e.g., one-way and two-way).

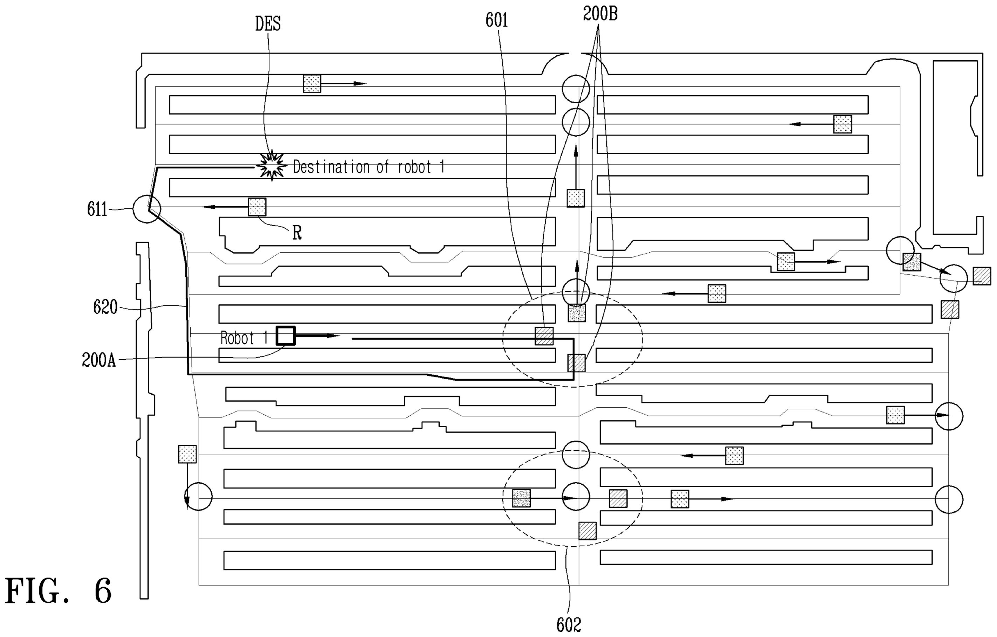

FIG. 6 is a diagram illustrating generation of a detour path by considering the respective driving directions of all moving robots in relation to the present disclosure.

With reference to FIG. 6, an embodiment related to the process 440 of generating a detour path in FIG. 4 will be described below in detail. When a detour path for a detected robot is generated not to overlap with the driving directions of all robots moving in a space, it will be more effective for rebalancing.

According to an embodiment, the server 100 may assign a bias to each of designated zones that the robots moving in the space are heading towards by considering the current position and destination of the detected robot, and generate a detour path so that it does not overlap with the paths of the moving robots based on this.

In other words, in FIG. 5, robot 1 200A does not just bypass designated zone 1 501, but a detour path is generated in a balanced manner so that it does not overlap with the driving paths of other robots moving across the entire map.

In FIG. 6, robot 1 200A not only avoids a congested designated zone 601, but also assigns a bias to corresponding links among possible paths from its current position to a destination DES, so that it does not overlap with paths in the driving directions of all robots currently moving on the map. In FIG. 6, a bias is assigned to a forward node based on the driving direction of each robot, and each of the forward nodes is indicated by a solid circle.

The server 100 determines a detour path for robot 1 200A so that the count of assigned biases is minimal.

For example, in FIG. 6, a bias is assigned to an intersection node 611 that is first encountered in the forward direction (arrow direction) of a moving robot R, and biases are assigned to nodes corresponding to other robots in the same way.

When robot 1 200A generates a detour path downwards to avoid the designated zone 601, three more biases are counted until the destination DES, passing through another designated zone 602. When a detour path is generated upwards from the designated zone 601, an additional one bias is counted until the destination DES. Since a higher count of biases means that more robots are passing through a corresponding intersection, the detour movement of the robot will be generated efficiently when the number of nodes/links assigned biases is minimal.

In contrast, for the detour path 620, only one bias is counted from the current position of robot 1 200A to the destination DES, making the count of assigned biases minimal. This means that the overlap with the driving paths of other robots is minimal, providing a balanced detour path across the entire map.

As such, according to the embodiment of the present disclosure, as a path that bypasses a congested area is generated by further considering the driving directions and paths of other robots to prevent path overlap, robots not only avoid crowding into a specific section but also move in an overall balanced manner.

Even when a detour path is generated to avoid a congestion situation, there are exceptional cases where the robot should follow an existing path and pass directly through a congested zone. For example, the cases may include when all links leading out of the congested zone are one-way driving paths, when a detour path is excessively longer than the existing path, or when a detour path is generated but the result is the same as the existing driving path.

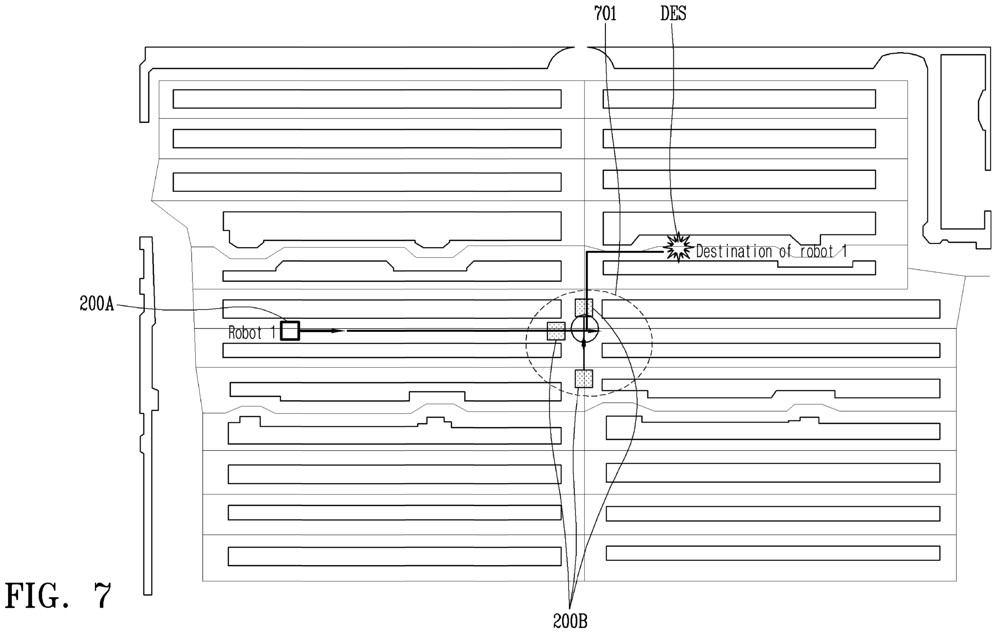

FIG. 7 illustrates an operation when a generated detour path and an existing driving path are identical, as such an example.

According to an embodiment, once a detour path for a robot detected by the server 100 (in FIG. 1) is generated, it is transmitted to the detected robot. When there are a plurality of detected robots, a detour path is generated and transmitted for each robot.

As such, when the detected robot enters within a predetermined range of a congested designated zone and receives the detour path from the server, it transmits information about a modified driving path according to the received detour path back to the server, and performs driving according to that modified driving path.

The information about the modified driving path includes newly passed links and nodes, compared to the existing driving path, and may include whether the modified driving path bypasses or passes straight through the congested designated zone. The information about the modified driving path may also include the degree of change, compared to the existing driving path.

According to an embodiment, when the generated detour path is identical to the existing driving path or when the current driving path of the robot is a one-way path, the server 100 may transmit a stop command to the detected robot, instructing it to start driving only after the congestion situation of a forward detour node is resolved.

Since the congestion status of the forward detour node is checked at intervals shorter than intervals at which a congestion level is determined, the robot may immediately recognize when the forward congestion situation is resolved.

The server 100 may transmit a driving start command to the detected robot again, when the congestion situation is resolved, or may not transmit an additional start command after the stop command, allowing the robot to autonomously start driving once the congestion situation is resolved.

Referring to FIG. 7, a generated detour path for robot 1 200A approaching a congested designated zone 701 to a destination DES is identical to an existing driving path. In this case, robot 1 200A waits until the other robots 200B in the designated zone 701 move and the congestion situation is resolved. A waiting point for robot 1 200A may be a boundary point of the designated zone 701 or its vicinity.

When the resolution of the congestion situation in the designated zone 701 is recognized before or at the same time robot 1 200A reaches the waiting point, robot 1 200A may continue to drive along the existing driving path without stopping.

On the contrary, when the congestion situation in the designated zone 701 continues, robot 1 200A stops at the waiting point until the congestion situation is resolved. During this time, the server 100 identifies the congestion level of the other robots 200B within the designated zone 701 at intervals, for example, at intervals of 500msec, shorter than intervals at which the congestion levels of all designated zones are determined.

When the congestion situation in the designated zone 701 is resolved, robot 1 200A starts driving towards the destination DES according to a start command received from the server 100 or based on its own judgment.

Further, although not shown, when the generated detour path is much longer that the existing driving path (e.g., by about 4.5 times or more), it is desirable to wait until the congestion situation is resolved before resuming driving. Therefore, in this case as well, a stop command is transmitted by the server 100.

As described, according to an embodiment of the present disclosure, when there are special circumstances such as the robot currently driving on a one-way path or the detour path being identical to the existing driving path, the robot may operate flexibly even in the exceptional situations by waiting for a specific time and then resuming driving when the congestion situation is resolved.

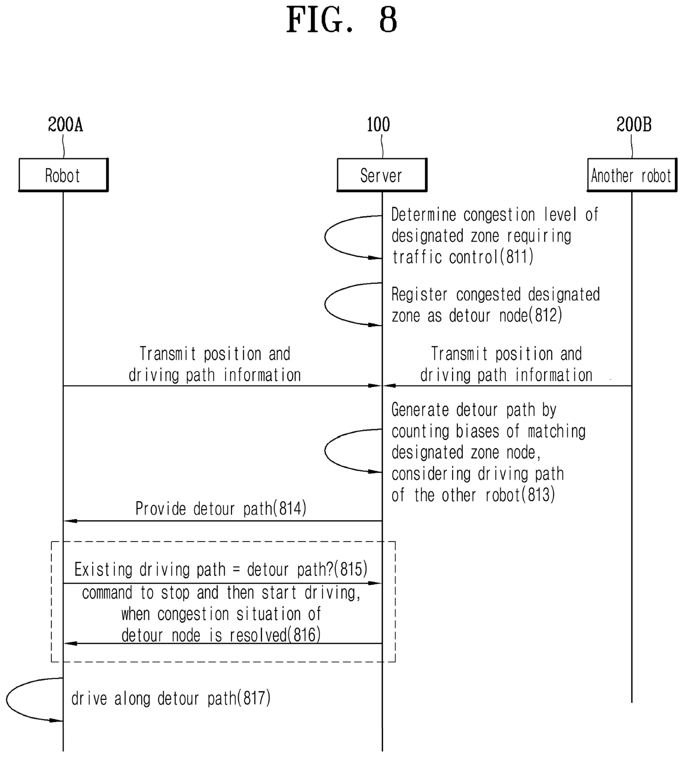

FIG. 8 is a detailed flowchart illustrating a method for providing a detour path for congestion avoidance in relation to the present disclosure.

In FIG. 8, the robot 200A is defined as a robot that includes a detour node in its driving path and has entered within a predetermined range of the detour node. Further, in FIG. 8, another robot 200B is defined as at least one robot located in a surrounding area of the detour node, either approaching the detour node or moving away from it.

The server 100 may communicate with the robot 200A, the other robot 200B, and all robots in a space, and determine the congestion levels of designated zones requiring traffic control on a map (811). The designated zone may be set around intersections, narrow paths, or passages on the map.

According to an embodiment, the server 100 may determine the congestion level by considering the respective driving directions of the robots around the designated zone. For example, even if there are three robots around a designated zone, when they are all moving away from the designated zone in different directions, it may be determined that there is no congestion situation. Conversely, even if there are two robots, when they are both approaching the designated zone from different directions, it may be determined that there is a congestion situation.

According to an embodiment, the server 100 determines the congestion levels of all designated zones on the map at specific time intervals.

For example, the server 100 may determine the congestion levels of surrounding areas of all intersections across the entire topology map at specific time intervals (e.g., every 8 seconds). That is, it checks the existence of a congestion situation for all designated zones at specific time intervals.

According to an embodiment, the specific time interval may vary depending on the characteristics of the applied map and the number of robots operating in the space on the map.

For example, when the distance between designated zones is short due to the characteristics of the topology map, the specific time interval may be increased from a reference value, and when the number of operating robots is small, the specific time interval may be decreased from the reference value.

Subsequently, based on the result of the congestion level determination, the server 100 may register the congested designated zone as a detour node (812). Registering a designated zone as a detour node means storing the designated zone or its surrounding area as a detour node in the memory of the server 100 or a storage linked to the server 100 to ensure that the designated zone is set as a congested one and thus bypassed.

According to an embodiment, the detour node registration is performed for all designated zones across the entire topology map. That is, the congestion level of each of the designated zones across the entire map is determined, and a designated zone with a congestion level equal to or greater than a predetermined reference is registered as a detour node.

According to an embodiment, whether the congestion level of a designated zone is equal to or greater than the predetermined referenced may be determined based on the number of robots moving towards the designated zone and their respective driving directions.

For example, when there are three robots moving toward the designated zone but they are all moving away from the detour node in different directions, it is determined that the congestion level is less than or meets the predetermined reference. That is, the congestion level of the designated zone is determined to be low. Conversely, for example, when two robots are approaching an intersection facing each other towards the designated zone, it is determined that the congestion level is greater than the predetermined reference, meaning the congestion level of the designated zone is high.

Once the process of registering all designated zones with high congestion levels as detour nodes is complete, the server 100 receives position and driving path information from robot 200A and the other robot 200B, respectively, and searches for robots approaching the registered detour nodes.

Then, the server 100 generates a detour path to help the detected robot avoid congestion at the detour node as follows.

Specifically, the server 100 generates the detour path by counting biases on the node of the corresponding designated zone, while considering the driving path of the other robot 200B existing around the detour node (813). That is, in order to select a link for the detour node so that the path does not overlap while considering the driving direction of the other robot 200B, a bias or a reference value is assigned to a link that matches the current driving direction of the other robot 200B.

Also, according to an embodiment, the server 100 generates the detour path by assigning a bias not only to the other robot 200B around the detour node but also to designated zones ahead in the driving directions of all robots moving on the map.

Accordingly, the detour path may be generated in a balanced manner so that it avoids not only the current detour node but also does not overlap with the driving paths of other robots moving throughout the map at that moment.

Once the detour path generated by the server 100 is provided to the detected robot 200A (814), the robot 200A drives along the detour path instead of an existing path (817).

When it is determined that the received detour path is identical to the existing driving path (815), the robot 100A it will face a congestion situation if it proceeds as is. Therefore, the detected robot 200A receives a control command from the server 100 to stop and start driving only when the congestion situation at the detour node is resolved (816).

According to an embodiment, when a detour path is generated but corresponds to an exceptional situation, the robot may drive along the existing driving path instead of the detour path. In this case, to avoid the congestion situation, the robot may be controlled to stop and then drive along the existing path after the congestion situation is resolved or after a specific time has elapsed, under the control of the server 100.

As described above, the robot driving control system and robot control method according to an embodiment of the present disclosure may reduce the occurrence of congested areas by identifying the congestion level of a space in advance and providing a detour path to prevent robots from crowding into a specific section, even if actual congestion or collision does not occur. Consequently, robots may complete their tasks (e.g., delivery, picking, and so on) without a time delay. Further, when a path detouring around a congested area is generated, path overlap is prevented by considering the driving directions and driving paths of other robots. This not only prevents robots from crowding into a specific section but also ensures they move in an overall balanced manner. Further, when there are special circumstances such as the robot currently driving on a one-way path or the detour path being identical to the existing driving path, the robot may operate flexibly even in the exceptional situations by waiting for a specific time and then resuming driving when the congestion situation is resolved.

The additional scope of applicability of the present disclosure will become apparent from the following detailed description. However, various changes and modifications within the spirit and scope of the present disclosure may be clearly understood by those skilled in the art, and thus, specific embodiments such as the detailed description and preferred embodiments of the present disclosure are to be understood as being given by way of example only.

The features, structures, effects, and so on described in the embodiments above are included in at least one embodiment of the present disclosure and are not necessarily limited to only one embodiment. Further, the features, structures, effects, and so on exemplified in each embodiment may be combined or modified and implemented for other embodiments by those skilled in the art, without departing from the essential characteristics of the present disclosure. Therefore, contents related to these combinations and variations should be construed as being included within the scope of the present disclosure.

Also, although the above description is given centering on embodiments, they are merely examples and do not limit the present disclosure, and it will be understood by those skilled in the art that various modifications and applications not exemplified above are possible without departing from the essential characteristics of the embodiments. For example, each component specifically shown in an embodiment may be modified and implemented. And differences related to these modifications and applications should be construed as being included within the scope of the present disclosure as defined by the appended claims.

## Claims

1. A robot driving control system comprising:
a plurality of robots driving in a predetermined space on a map; and
a server communicating with the plurality of robots and determining a congestion level of a designated zone requiring traffic control in the predetermined space on the map,
wherein the server registers at least one designated zone as a detour node based on a determined congestion level, detects a robot that includes the registered detour node in a driving path thereof and enters within a predetermined range of the detour node, and generates a detour path for the detected robot by considering respective driving paths of other robots existing around the detour node.

2. The robot driving control system of claim 1, wherein the server determines a congestion level of each designated zone by considering driving directions of other robots existing around the designated zone.

3. The robot driving control system of claim 2, wherein the server determines whether to register a detour node based on whether the determined congestion level exceeds a predetermined reference, registers a detour node corresponding to a designated zone having a congestion level exceeding the predetermined reference in a list, and deletes a detour node corresponding to a designated zone having a congestion level decreased to satisfy the predetermined reference from the list.

4. The robot driving control system of claim 3, wherein the server determines congestion levels of designated zones across the entire map at specific time intervals and updates the list based on the determination, and
wherein the specific time interval is variable based on characteristics of the map and a total number of robots operating in the predetermined space.

5. The robot driving control system of claim 1, wherein the server generates the detour path for the detected robot by counting biases on a link of the detour node, considering the respective driving paths of the other robots.

6. The robot driving control system of claim 5, wherein when the driving direction of another robot approaches the detour node, the server assigns an additional bias to a link of the driving path of the other robot to avoid the link, and when the driving direction of the other robot leaves the detour node, the server assigns the same bias as other links to the link of the driving path of the other robot to select the link for the detour path.

7. The robot driving control system of claim 5, wherein the server generates the detour path not to overlap with paths of moving robots by assigning a bias to each designated zone towards which the robots moving in the predetermined space are heading, considering a current position and destination of the detected robot.

8. The robot driving control system of claim 1, wherein, when the detected robot receives the detour path from the server after entering within the predetermined range, the robot transmits information about a driving path changed according to the received detour path to the server and performs driving according to the changed driving path.

9. The robot driving control system of claim 1, wherein when the generated detour path is the same as an existing driving path or when a current driving path of the detected robot is a one-way path, the server transmits a stop command to the detected robot to allow the robot to start driving after a congestion situation of a forward detour node is resolved.

10. A robot control method including a plurality of robots driving in a predetermined space on a map and a server communicating with the plurality of robots, the robot control method comprising:
determining a congestion level of a designated zone requiring traffic control in the predetermined space on the map;
registering at least one designated zone as a detour node based on a determined congestion level;
detecting a robot that includes the registered detour node in a driving path thereof and enters within a predetermined range of the detour node; and
generating a detour path for the detected robot by considering respective driving paths of other robots existing around the detour node.

11. The robot control method of claim 10, wherein determining the congestion level includes determining a congestion level of each designated zone by considering driving directions of other robots existing around the designated zone.

12. The robot control method of claim 11, wherein registering the at least one designated zone as the detour node includes:
determining whether to register a detour node based on whether the determined congestion level exceeds a predetermined reference;
registering a detour node corresponding to a designated zone having a congestion level exceeding the predetermined reference in a list; and
deleting a detour node corresponding to a designated zone having a congestion level decreased to satisfy the predetermined reference from the list.

13. The robot control method of claim 12, wherein determining the congestion level includes determining congestion levels of designated zones across the entire map at specific time intervals and updating the list based on the determination, and
wherein the specific time interval is variable based on characteristics of the map and a total number of robots operating in the predetermined space.

14. The robot control method of claim 10, wherein generating the detour path includes generating the detour path for the detected robot by counting biases on a link of the detour node, considering the respective driving paths of the other robots.

15. The robot control method of claim 14, wherein generating the detour path includes:
when the driving direction of another robot approaches the detour node, assigning an additional bias to a link of the driving path of the other robot to avoid the link; and
when the driving direction of the other robot leaves the detour node, assigning the same bias as other links to the link of the driving path of the other robot to select the link for the detour path.

16. The robot control method of claim 14, wherein generating the detour path includes generating the detour path not to overlap with paths of moving robots by assigning a bias to each designated zone towards which the robots moving in the predetermined space are heading, considering a current position and destination of the detected robot.

17. The robot control method of claim 10, further comprising, after the detour path is generated, when the detected robot receives the detour path from the server after entering within the predetermined range, transmitting information about a driving path changed according to the received detour path to the server and performing driving according to the changed driving path by the detected robot.

18. The robot control method of claim 10, further comprising, after the detour path is generated, when the generated detour path is the same as an existing driving path or when a current driving path of the detected robot is a one-way path, transmitting a stop command to the detected robot by the server to allow the robot to start driving after a congestion situation of a forward detour node is resolved.
